# FASCICULE DE BREVET EUROPEEN

(11) **EP 3 898 279 B1**
(45) Date de publication et mention de la délivrance du brevet: **19.10.2022**
(21) Numéro de dépôt: 19839387.8
(22) Date de dépôt: 11.12.2019
(51) Int. Cl.: B60C 11/03, B60C 11/12, B60C 11/04, B60C 11/13

(54) **BANDE DE ROULEMENT COMPORTANT DES CAVITES CACHEES ET DES RAINURES**
LAUFFLÄCHE MIT VERBORGENEN VERTIEFUNGEN UND NUTEN
TREAD COMPRISING HIDDEN CAVITIES AND GROOVES

(30) Priorité: 21.12.2018 FR 1873836; 30.01.2019 FR 1900864
(43) Date de publication de la demande: 27.10.2021
(73) Titulaire: COMPAGNIE GENERALE DES ETABLISSEMENTS MICHELIN, 63000 Clermont-Ferrand (FR)
(72) Inventeur: BARDIN, Damien, 63040 CLERMONT-FERRAND CEDEX 9 (FR); BERTHIER, Romain, 63040 CLERMONT-FERRAND CEDEX 9 (FR); MARLIER, Fabien, 63040 CLERMONT-FERRAND Cedex 9 (FR)
(74) Mandataire: Millanvois, Patrick Jacques Jean
(86) Numéro de dépôt international: PCT/FR2019/053020
(87) Numéro de publication internationale: WO 2020/128235

(56) Documents cités:
- WO-A1-2012/130735
- WO-A1-2013/095406
- WO-A1-2013/150143
- FR-A1- 3 061 081
- FR-A1- 3 061 082

## Description

### DOMAINE TECHNIQUE

[L'invention concerne les bandes de roulement pour pneus de poids lourd et plus particulièrement les arrangements de creux dont sont pourvues ces bandes pour lesquelles les performances en drainage de l'eau sur la chaussée par temps de pluie sont rendues pérennes, ces bandes de roulement ayant des performances améliorées en roulage et en résistance aux agressions externes.

### DEFINITION

La bande de roulement d'un pneu désigne la partie du pneu destinée à venir au contact de la chaussée par l'intermédiaire d'une surface de roulement. Cette bande de roulement s'use progressivement au cours du roulage du pneu.

Par découpure, on entend toute cavité ou creux réalisé notamment par moulage dans une bande de roulement pour pneu, une découpure s'étendant à la fois dans la profondeur de la bande de roulement et dans une direction principale - que l'on peut prendre comme étant la direction d'écoulement de l'eau dans la découpure lors d'un roulage par temps de pluie. Cette direction principale correspond à la plus grande dimension de la découpure sur la surface de roulement

Par rainure ouverte à neuf, on entend une découpure ouverte sur la surface de roulement d'une bande de roulement à neuf, cette rainure étant délimitée par des parois en vis-à-vis, la distance moyenne entre ces parois étant appropriée pour que ces parois ne soient pas en contact l'une avec l'autre dans les conditions normales d'utilisation du pneu.

Par incision, on entend une découpure mince ayant une largeur moyenne petite, cette largeur moyenne, correspondant à la distance moyenne séparant les parois en vis-à-vis la délimitant, étant telle que, sous les conditions normales d'utilisation du pneu, ces parois sont, au moins partiellement, en contact l'une sur l'autre lors du passage dans la région de contact du pneu avec la chaussée.

Par cavité cachée, on entend une cavité formée sous la surface de roulement à neuf de la bande de roulement, cette cavité pouvant être destinée à former une nouvelle rainure ouverte sur la nouvelle surface de roulement générée après une usure partielle prédéterminée. Une cavité cachée est délimitée par deux parois principales en vis-à-vis, ces deux parois principales étant reliées entre elles par une partie inférieure formant un fond et par une partie supérieure dans le prolongement de ces parois radialement vers l'extérieur. Dans cette partie supérieure, une incision peut s'ouvrir pour relier la cavité cachée à la surface de roulement à neuf. Vue en coupe, une cavité cachée peut prendre toute forme géométrique notamment circulaire, rectangulaire, triangulaire.

Par épaisseur de matière à user d'une bande de roulement, on entend l'épaisseur de matière de cette bande de roulement pouvant être usée en roulage avant d'atteindre une limite légale d'usage, cette limite pouvant être repérée par des dispositifs indicateurs de l'usure formés notamment dans les rainures. Lorsque cette limite est atteinte, une intervention est nécessaire afin de reformer un nouveau dessin de creux sur la bande de roulement du soit de remettre une nouvelle bande de roulement voire de changer de pneu.

Dans la présente description, on utilise les termes radial ou radialement pour indiquer une direction qui, lorsqu'elle est prise sur le pneu, est une direction perpendiculaire à l'axe de rotation du pneu. Cette même direction, lorsqu'elle est prise sur une bande de roulement seule, correspond à la direction de l'épaisseur de ladite bande.

Par ailleurs, on utilise le terme circonférentiel pour indiquer une direction qui, correspond à une direction tangente à tout cercle centré sur l'axe de rotation du pneu. Cette direction circonférentielle correspond à la direction longitudinale de la bande de roulement lorsque cette dernière est réalisée sous la forme d'une bande plane avant son incorporation dans la fabrication d'un nouveau pneu ou le rechapage d'un pneu usé.

Le terme transversal ou axial fait référence à une direction qui est parallèle à la direction de l'axe de rotation du pneu. Cette direction est perpendiculaire à la direction radiale et à la direction circonférentielle. Une direction est dite oblique dès lors qu'elle forme un angle différent de zéro avec la direction circonférentielle ou longitudinale sur une bande de roulement.

### TECHNIQUE ANTÉRIEURE

De façon connue, des conditions de roulage par temps de pluie requièrent une élimination la plus rapide possible de l'eau entre la bande de roulement de chaque pneu et la chaussée afin d'assurer le contact de la bande de roulement avec cette chaussée. L'eau qui n'est pas repoussée sur l'avant ou sur les côtés du pneu est captée et s'écoule dans des rainures formées dans la bande de roulement du pneu, ces rainures s'ouvrant à neuf sur la surface de roulement. Ces rainures peuvent être orientées dans la direction circonférentielle ou la direction transversale ou encore dans une direction oblique intermédiaire entre les deux précédentes directions voire dans une combinaison de ces directions.

Quelle que soit la catégorie de pneu, la bande de roulement de ce pneu doit offrir une performance en drainage de l'eau sur la route qui se situe toujours au-dessus d'une performance minimale dite performance de sécurité. Compte tenu de l'usure progressive de la bande de roulement en roulage qui réduit progressivement les surfaces de sections transversales des rainures et en conséquence la capacité de ces rainures à évacuer une quantité donnée d'eau, il est usuel de réaliser des rainures débouchant sur la surface de roulement à l'état neuf et se prolongeant dans l'épaisseur de la bande jusqu'à au moins un niveau qui correspond à une limite légale d'usure nécessitant le retrait du pneu pour soit renouveler la bande de roulement par rechapage soit changer de pneu.

La réalisation d'une telle pluralité de rainures ouvertes sur la surface de roulement d'une bande de roulement a pour inconvénient de réduire la quantité de matière pour une largeur donnée de bande de roulement et par là de diminuer très sensiblement les rigidités de la bande de roulement ce qui a une incidence sur la performance en usure. Il en résulte que pour faire face aux sollicitations subies par la bande lors d'un roulage, la personne du métier doit prévoir de compenser ces diminutions de rigidité par tout moyen à sa disposition notamment en adaptant la structure interne du pneu ce qui, bien entendu, n'est pas sans incidence sur le coût de fabrication du pneu lui-même. Ces diminutions de rigidité peuvent en outre affecter la vitesse d'usure, la régularité de cette usure et certaines des performances attendues en roulage.

Par ailleurs, on constate une augmentation de la résistance au roulement qui est liée aux cycles de plus grande déformation des matériaux élastomériques formant la bande de roulement, ce qui se traduit par une augmentation sensible de la consommation des véhicules équipés de tels pneus.

Pour résoudre un tel problème, il a été proposé dans le document EP 2323858-B1 de former en totalité sous la surface de roulement de la bande de roulement à neuf des cavités cachées, ces cavités cachées étant prolongées vers la surface de roulement de la bande de roulement à neuf par une incision pouvant être de géométrie plane ou ondulée. Avec ce type de pneu, il est possible de renouveler, selon le besoin, une partie plus ou moins importante du volume de drainage initial lorsque la bande a atteint un niveau d'usure prédéterminé.

De même, il a été proposé de prolonger les cavités cachées par des puits s'ouvrant à la fois dans une cavité cachée et jusqu'à la surface de roulement de la bande de roulement à neuf (publication WO 2016191443-A1). Les documents FR 3061081 A1, FR 3061082 A2 et WO 2013095406 A1 sont également pertinents vis-à-vis de l'état de la technique antérieure.

Il est bien sûr connu de combiner la présence de rainures ouvertes sur la surface de roulement à neuf et de creux cachés formant des rainures additionnelles après une usure partielle de la bande de roulement. Ces rainures additionnelles compensent au moins partiellement la perte de volume des rainures initialement ouvertes sur la surface de roulement à neuf, perte liée à l'usure de la bande de roulement.

Si cette dernière proposition offre un intérêt certain, il reste une marge de progression notamment dans l'obtention d'une moindre réduction de rigidité liée à la présence de creux ouverts sur la surface de roulement à neuf et dans l'amélioration de la performance en usure - notamment l'obtention d'une meilleure régularité (c'est à dire pas ou peu d'usure localisée ou encore irrégulière), de la bande de roulement avant l'apparition des rainures additionnelles formées par les cavités cachées.

### RÉSUMÉ DE L'INVENTION

La présente invention concerne une solution à ce problème d'usure irrégulière pouvant intervenir lors de la formation d'une nouvelle rainure à l'ouverture d'une cavité cachée sous la surface de roulement d'une bande de roulement neuve tout en limitant l'introduction de corps étrangers à l'intérieur des cavités cachées pendant le roulage.

À cet effet, l'invention a pour objet une bande de roulement pour pneu de véhicule poids lourd ayant une épaisseur totale E correspondant à l'épaisseur totale de matière à user en roulage. Cette bande de roulement a une surface de roulement à neuf destinée à venir en contact avec une chaussée lors du roulage d'un pneu pourvu de cette bande. Cette surface de roulement se renouvelle de façon progressive avec l'usure générée par le roulage sur la chaussée.

Cette bande de roulement comprend un premier volume de cavités ouvertes sur la surface de roulement à neuf, et un deuxième volume de cavités formé en totalité sous la surface de roulement à neuf, ce deuxième volume de cavité comprenant au moins un canal de hauteur Hc délimité par deux parois principales, ces deux parois principales distantes d'une largeur maximale Lc étant reliées entre elles par une partie inférieure formant un fond et par une partie supérieure dans le prolongement de ces parois radialement vers l'extérieur.

Ce canal est destiné à former, après usure partielle correspondant à une épaisseur Lu, une rainure additionnelle ouverte sur la surface de roulement, ce canal comprenant une pluralité d'extensions formant des cavités, chaque extension s'ouvrant au moins dans la partie supérieure de ce canal par une ouverture ayant une surface de section Sa au moins égale à 0.8*(Hc*Lc), ladite extension s'étendant entre ledit canal et la surface de roulement à neuf sur une hauteur He au moins égale à 20% et au plus égale à 75% de l'épaisseur de matière Lu mesurée entre la partie supérieure du canal et la surface de roulement à neuf. En outre, les ouvertures respectives de deux extensions successives d'un même canal, dans la partie supérieure du canal, sont séparées par un pont de matière dont la longueur, mesurée au niveau de la partie supérieure du canal selon la direction principale du canal, est au moins égale 2 fois la largeur Lc du canal, typiquement au moins égale à 10 mm.

Avantageusement, chaque extension s'ouvre dans ledit canal par une ouverture de section Sa ayant une largeur Le égale à la largeur Lc du canal pour limiter les pertes de charge d'un écoulement d'eau lorsque les extensions s'ouvrent sur la surface de roulement après usure partielle.

L'usure partielle à partir de laquelle le canal génère une rainure additionnelle correspond à une épaisseur Lu égale à au moins 30% et au plus 85 % de la profondeur E de matière à user en roulage.

Préférentiellement, l'ouverture de chaque extension dans un canal a une forme allongée dans la direction principale du canal (cette direction principale étant la direction de la longueur du canal dans laquelle se produit un écoulement d'eau lors d'un roulage sur chaussée revêtue d'eau). Cette extension peut être de section constante ou de section variable. Lorsque la section est variable, on désigne par Lmax la longueur maximale de la section de l'extension prise dans un plan de coupe parallèle à la surface de roulement et par Lmin la longueur minimale de la section de l'extension prise dans un autre plan de coupe parallèle à la même surface de roulement.

Préférentiellement, la longueur maximale Lmax d'une extension est supérieure à la longueur minimale Lmin de la même extension, ces deux longueurs étant mesurées selon une même direction ; avantageusement, on choisit un ratio Lmax/Lmin au moins égal à 1.5.

Pour obtenir un meilleur drainage de l'extérieur vers l'intérieur du canal, la section de chaque extension à partir de son ouverture sur la surface de roulement après usure partielle va en se réduisant jusqu'à la section Sa. Cette géométrie limite aussi les risques de capture d'objets dans le canal.

Selon une autre variante de l'invention, chaque extension a une géométrie appropriée afin que toute surface de section prise entre la section de l'ouverture dans le canal et la partie de l'extension la plus proche de la surface de roulement à neuf soit inférieure à la surface de section Sa.

Avantageusement, et dans le cas où les sections des extensions vont en se réduisant de l'extérieur vers l'intérieur de la bande de roulement, l'angle moyen que font avec une direction radiale les faces délimitant chaque extension est au moins égal à 15° (la direction radiale correspond à la direction de l'épaisseur de la bande de roulement). Cette disposition réduit le risque d'introduction de cailloux de grande taille à l'intérieur du canal.

Avantageusement, les extensions d'un même canal ne s'ouvrent pas toutes sur une surface de roulement pour une même usure partielle, ces extensions présentant des hauteurs He différentes.

Avantageusement lorsque la bande de roulement comprend plusieurs canaux d'orientation circonférentielle, les extensions sont décalées circonférentiellement entre les différents canaux pour réduire le bruit en roulage à l'ouverture des extensions sur la surface de roulement après usure partielle.

Avantageusement lorsque la bande de roulement comprend plusieurs canaux d'orientation circonférentielle, les extensions formées sur deux canaux d'une même bande de roulement s'ouvrent sur la surface de roulement pour des usures différentes.

S'il est possible de mouler une bande de roulement comportant une telle répartition de creux à la fois ouvert et caché en moulant ladite bande de roulement par sa face externe (moulant la surface de roulement de la bande) et par sa face interne cette dernière étant destinée à être mise en contact avec la surface externe d'une ébauche de pneu, il est malgré tout plus aisé de prolonger chaque cavité cachée jusqu'à la surface de roulement à neuf par une incision de largeur appropriée, cette incision pouvant en outre avoir une géométrie adaptée pour limiter la diminution de rigidité de la bande de roulement. L'incision précitée peut prendre toute forme géométrique appropriée, notamment présenter des zigzags ou ondulations dans sa profondeur de manière à compenser au moins en partie la perte de rigidité liée à la présence même de cette incision.

Grâce à cette disposition des volumes de cavité dans une bande de roulement et à la présence d'une pluralité d'extensions mettant les canaux en communication avec l'extérieur du pneu après une usure partielle prédéterminée, il est possible de limiter l'apparition d'une usure irrégulière et d'assurer un bon comportement dans les conditions de roulage usuelles et cela tout au long de l'utilisation de la bande de roulement que ce soit à neuf ou à tout état d'usure intermédiaire avant d'atteindre la limite d'usure fixée par le manufacturier. Par ailleurs, les risques d'agression liée à l'introduction de corps agressifs dans les canaux cachés sont réduits.

D'autres caractéristiques et avantages de l'invention ressortent de la description faite ci-après en référence aux dessins annexés qui montrent, à titre d'exemple non limitatif, des formes de réalisation de l'objet de l'invention.

### BRÈVE DESCRIPTION DES DESSINS

[Fig 1] La figure 1 montre une première variante de l'invention d'une nervure d'une bande de roulement à l'intérieur de laquelle un canal est moulé, ce canal étant surmonté d'une pluralité d'extensions en forme générale d'entonnoir ;
[Fig 2] La figure 2 montre en coupe la nervure montrée avec la figure 1 à l'état neuf ;
[Fig 3] La figure 3 montre en coupe la nervure montrée avec la figure 1 dans un état partiellement usé ;
[Fig 4] La figure 4 montre une deuxième variante dans laquelle la géométrie des extensions présente une section de surface allant en augmentant à partir de son ouverture après usure partielle ;
[Fig 5] La figure 5 montre en coupe la deuxième variante montrée avec la figure 4 à l'état neuf ;
[Fig 6] La figure 6 montre en coupe la deuxième variante montrée avec la figure 4 à l'état partiellement usée ;
[Fig 7] La figure 7 montre une vue partielle d'une troisième variante selon l'invention d'une bande de roulement à l'état neuf ;
[Fig 8] La figure 8 montre en coupe la troisième variante montrée avec la figure 7 ;
[Fig 9] La figure 9 montre une vue partielle de la troisième variante montrée avec la figure 7 après une usure partielle de la bande de roulement.

### DESCRIPTION DÉTAILLÉE

Pour faciliter la lecture des figures, des mêmes signes de référence sont employés pour la description de variantes de l'invention dès lors que ces signes font référence à des éléments de même nature que cette nature soit structurelle ou bien fonctionnelle.

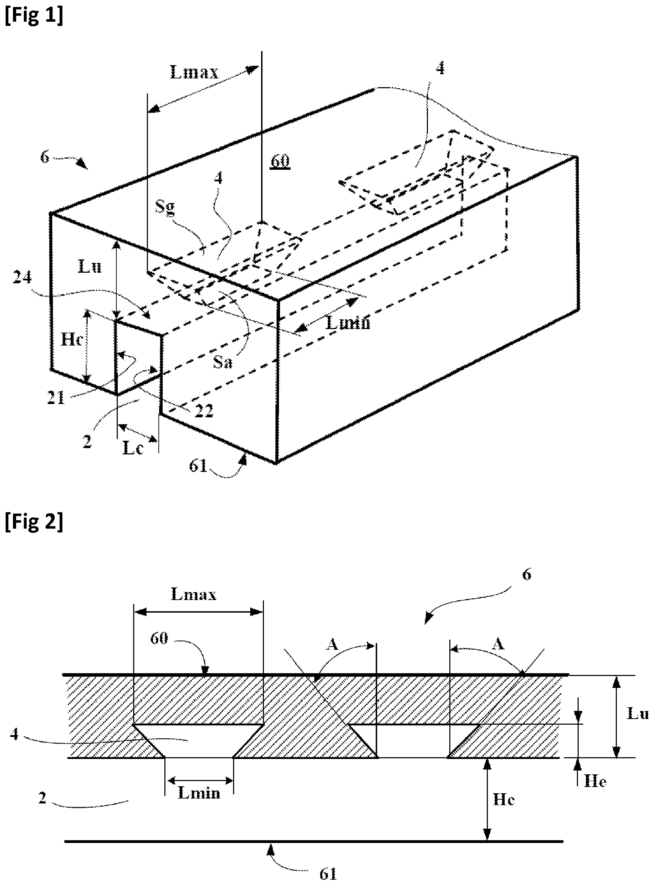

La figure 1 montre une première variante de l'invention pour laquelle on a isolé une nervure 6 d'une bande de roulement à l'intérieur de laquelle un canal caché 2 est moulé, ce canal 2 est délimité par des parois principales 21, 22, ces parois se réunissant par une partie supérieure 24. Ce canal caché 2 est, dans le cas présent, moulé sur la face interne 61 de la bande de roulement, cette face interne 61 étant destinée à être positionnée sur une ébauche de pneu et maintenue en place par collage. Ce canal caché 2 a une hauteur Hc et une largeur Lc et est destiné à former une rainure additionnelle après une usure partielle Lu mesurée par rapport à la surface de roulement formée en partie par la surface externe 60 de la nervure.

Sur la partie supérieure 24 du canal caché 2, une pluralité de cavités formant des extensions 4 sont également moulées. Ces extensions 4 ont une géométrie en entonnoir, la section d'ouverture Sa sur le canal étant plus petite que toutes les autres sections, ces sections étant prises parallèlement à la surface externe 60 de la nervure 6. Chaque extension 4 a sensiblement une forme en entonnoir, la plus grande des sections Sg ayant une longueur maximale Lmax mesurée dans la direction principale du canal caché 2 et une largeur sensiblement égale à la largeur Lc du canal caché 2. La section Sa de l'ouverture dans le canal au moins égale à 0.8*(Hc*Lc) a une longueur Lmin mesurée dans la direction principale du canal caché 2 et une largeur inférieure à la largeur du canal caché 2. Comme cela est visible sur la figure 2, les parois délimitant chaque extension 4 font un même angle A par rapport à la direction radiale - direction de l'épaisseur de la bande de roulement - cet angle étant plus grand que 15 degrés.

La figure 2 montre la nervure de la figure 1 à l'état neuf dans un plan de coupe parallèle à la direction principale de la nervure 6 et perpendiculaire à la surface externe 60 de cette nervure. Les extensions 4 sont entièrement situées à l'intérieur de la nervure 6 et sont prévues pour s'ouvrir en même temps sur la surface de roulement obtenue après une usure partielle égale à la différence entre Lu (usure à laquelle une nouvelle rainure continue est formée) et la hauteur He des extensions. Dans le cas montré, la hauteur He est environ le tiers de la distance Lu entre la partie supérieure du canal et la surface externe 60 à neuf.

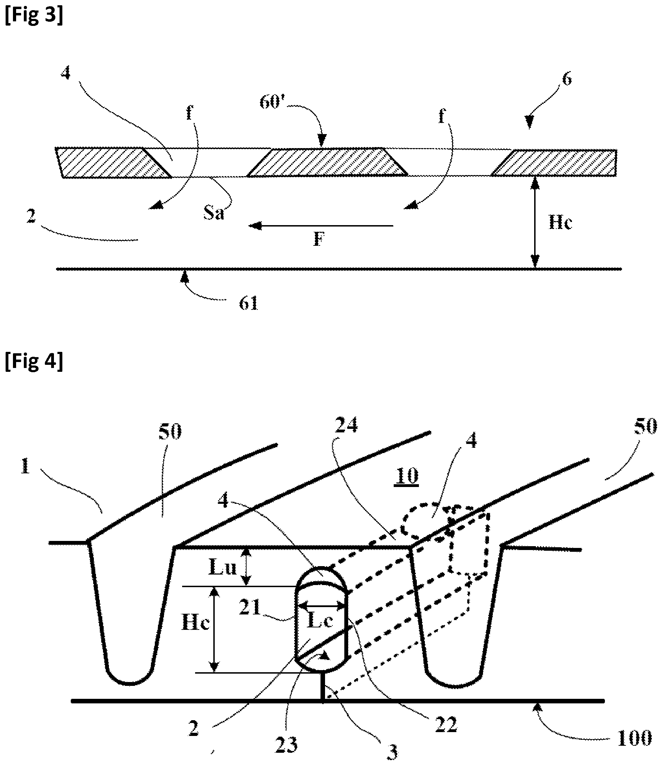

La figure 3 montre, dans le même plan de coupe, la nervure 6 montrée avec la figure 1 et la figure 2 dans un état partiellement usé, suffisant pour ouvrir toutes les extensions 4 sur la nouvelle surface de roulement 60'. Lors du roulage sur chaussée revêtue d'eau, les ouvertures des extensions 4 sont aptes à drainer vers l'intérieur du canal caché 2 les différents flux élémentaires f pour générer un flux principal F à l'intérieur dudit canal.

Grâce à cette disposition, il est possible d'avoir à neuf une rigidité appropriée pour une bande de roulement de pneu poids lourd en réduisant les volumes de cavités ouvertes sur la surface de roulement à neuf et en renouvelant le volume de creux après une usure partielle prédéterminée tout en assurant une plus grande régularité de l'usure de la bande quel que soit son niveau d'usure.

On a représenté, à la figure 4, une partie d'une bande de roulement 1 à l'état neuf selon une deuxième variante de l'invention.

Dans cette deuxième variante, on distingue un canal 2 formé à l'intérieur d'une bande de roulement 1 à neuf, ce canal 2 étant entièrement situé sous la surface de roulement 10 à l'état neuf et étant destiné à former une nouvelle rainure après une usure correspondant à une perte de matière sur une hauteur Lu afin notamment de compenser la diminution des volumes de creux des rainures 50 existantes à l'état neuf. Ce canal 2 est orienté dans la direction longitudinale de la bande de roulement (direction équivalente à la direction circonférentielle sur le pneu pourvu de cette bande de roulement). Ce canal 2 est délimité par des parois principales 21, 22 distantes l'une de l'autre d'une distance moyenne Lc, ces parois principales se réunissant l'une à l'autre à la fois dans une partie inférieure 23 et dans une partie supérieure 24. La distance moyenne entre la partie inférieure et la partie supérieure représente la hauteur Hc du canal.

Dans le cas décrit, la partie inférieure 22 du canal 2 est la partie du canal la plus éloignée de la surface de roulement 10 ; cette partie inférieure est prolongée par une incision 3 facilitant le moulage par la face interne 100 de la bande de roulement 1. Cette incision 3 s'étend dans la direction principale du canal, c'est à dire dans la direction circonférentielle, c'est-à-dire dans la direction dans laquelle s'écoule l'eau lorsque le canal est ouvert sur la surface de roulement et forme une nouvelle rainure. La face interne 100 de la bande de roulement 1 est destinée à être rendue solidaire de la surface externe d'une ébauche de pneu dépourvue de bande de roulement.

En outre, il est moulé une pluralité d'extensions 4 sur la partie supérieure 24 du canal 2, chaque extension 4 formant une cavité de géométrie hémisphérique de rayon He, ce rayon étant égal dans le cas présenté à la moitié de la largeur Lc du canal 1. Ces extensions 4 sont destinées à s'ouvrir sur la surface de roulement après une usure prédéterminée et à mettre ainsi en communication l'intérieur du canal 2 avec l'extérieur de la bande de roulement. Ces extensions 4 forment alors des sortes de puits permettant aux fluides de circuler de l'extérieur vers l'intérieur du canal et réciproquement.

La forme choisie pour chaque extension 4 génère une variation progressive et croissante de la section d'ouverture sur la surface de roulement avec l'usure. Cette géométrie est favorable à la fois sur le plan de l'usure (meilleure uniformité de celle-ci) et sur le plan de la limitation de la pénétration d'objets étrangers à l'intérieur du canal. La section maximale est atteinte au niveau de l'ouverture dans la partie supérieure du canal et est au moins égale à 0.8*(Hc*Lc).

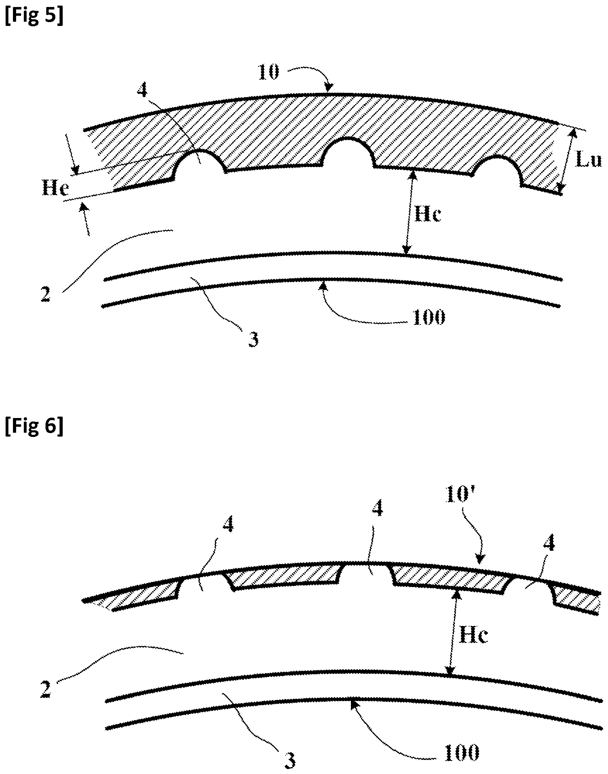

La figure 5 montre une coupe longitudinale (c'est à dire dans un plan perpendiculaire à la surface de roulement et passant par l'incision 3) de cette deuxième variante à l'état neuf. On distingue le canal 2 prolongé vers la surface de roulement 10 par une pluralité d'extensions 4 ayant la forme de cavités de section circulaire de rayon He. La partie de la bande de roulement entre ces extensions 4 et la surface de roulement à neuf 10 est ici dépourvue de toute incision afin d'obtenir une rigidité maximale sur cette partie. Les extensions 4 s'ouvrent sur l'extérieur après une usure correspondant à une perte d'épaisseur égale à la différence entre la hauteur Lu d'ouverture de la partie supérieure du canal 2 et la hauteur He des extensions 4.

La figure 6 montre la même coupe longitudinale de cette deuxième variante après une usure partielle ouvrant les extensions 4 sur la nouvelle surface de roulement 10'. On voit que la géométrie des extensions 4 permet d'avoir une section d'ouverture sur la surface de roulement 10' qui augmente progressivement avec l'usure jusqu'à l'ouverture de la partie supérieure du canal 2 formant alors une rainure additionnelle.

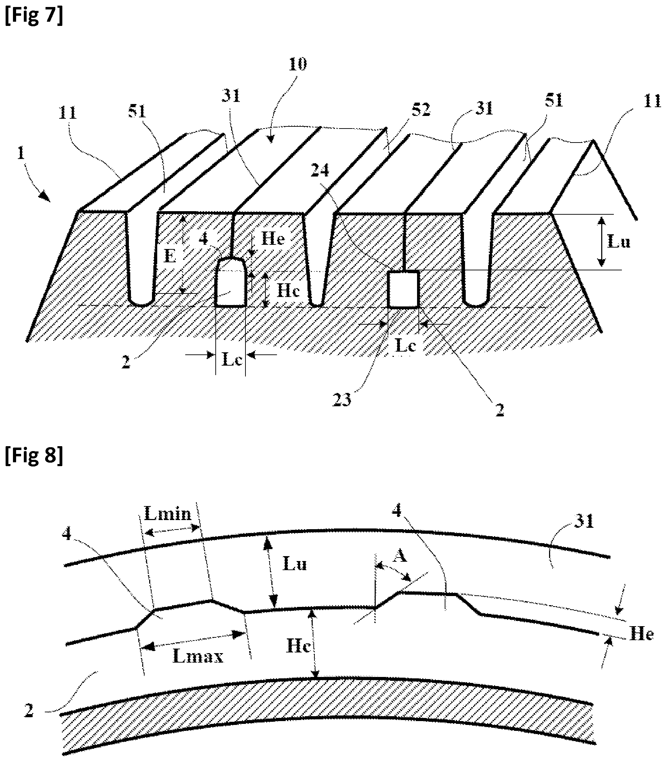

La figure 7 montre une vue partielle en coupe d'une troisième variante selon l'invention d'une bande de roulement 1 à l'état neuf. Cette variante est relative à une bande de roulement d'un pneu de dimension 385/65 R 22.5 destiné à équiper un essieu d'un véhicule poids-lourd. Cette bande de roulement 1 comprend à neuf, comme cela est visible sur cette figure 7, une surface de roulement 10 destinée à venir en contact avec la route lors du roulage.

Cette bande de roulement 1 a une largeur totale de 297 mm et comprend trois rainures principales ouvertes à l'état neuf sur la surface de roulement de la bande de roulement, ces rainures étant orientées longitudinalement. Les deux rainures principales 51 situées près des bords latéraux 11 de la bande ont une profondeur égale à 14 mm et une largeur égale à 14.7 mm sur la surface de roulement et égale à 11.7 mm en fond de rainure. La rainure principale 52 centrée sur le plan médian de la bande de roulement a une profondeur de 14 mm et des largeurs égales à 12.8 mm et 4.5 mm sur la surface de roulement et en fond de rainure respectivement.

En outre, cette bande de roulement 1 comprend deux canaux 2 orientés longitudinalement (c'est à dire circonférentiellement sur le pneu pourvu de cette bande) comme le sont les rainures principales 51, 52. Ces canaux 2 sont disposés en alternance avec les rainures principales 51, 52 et destinés à former des rainures additionnelles après une usure partielle ayant réduit le volume de creux disponible des rainures ouvertes à neuf sur la surface de roulement. Chaque canal 2 a une section transversale de forme globalement carrée. Chaque canal 2 est délimité par des parois en vis-à-vis distantes l'une de l'autre d'une distance moyenne Lc égale ici à 6.7 mm, ces parois en vis-à-vis se réunissant l'une à l'autre à la fois dans une partie inférieure 23 formant le fond du canal et dans une partie supérieure 24. La distance moyenne entre la partie inférieure et la partie supérieure est dite hauteur Hc du canal égale dans le cas présent à 6.7 mm. Le fond du canal se trouve à la même distance de la surface de roulement à neuf que le fond des rainures principales. L'épaisseur Lu à user avant de voir s'ouvrir le canal 2 sur la surface de roulement est égale à 7.9 mm.

L'épaisseur E indiquée sur la figure 7 représente la limite d'usure de la bande de roulement c'est-à-dire la limite à partir de laquelle une opération de renouvellement est nécessaire (recreusage, rechapage ou changement de pneu). Cette épaisseur est inférieure à la profondeur maximale des rainures principales.

De plus, il est formé sur la partie supérieure 24 de chaque canal 2 une pluralité d'extensions 4, chaque extension 4 ayant la forme d'une cavité allongée dans la direction principale dudit canal. Chaque extension 4 a une largeur Lp égale à la largeur Lc du canal 2 sur lequel elle est formée et une longueur minimale Lmin à sa partie la plus éloignée dudit canal et une longueur maximale Lmax à son ouverture sur ledit canal (ces longueurs sont représentées sur la figure 8 et elles sont mesurées dans la direction longitudinale), ladite ouverture ayant une section au moins égale à 0.8*(Hc*Lc).

Dans le cas décrit, la longueur minimale Lmin est égale à 6.5 mm et la longueur maximale Lmax est égale à 13 mm. Le ratio entre longueur maximale Lmax et longueur minimale Lmin est égal à 2.

À neuf, l'exemple décrit montre une bande de roulement ayant un taux de creux volumique total égal à 13% incluant les volumes de toutes les cavités (rainures, canaux et incisions). Ce taux de creux est établi en chiffrant le volume de toutes les cavités et en le rapportant au volume d'une bande de roulement compris entre la surface de roulement à neuf et une surface parallèle à la surface de roulement à neuf passant par les points des cavités les plus à l'intérieur de la bande de roulement.

Afin de faciliter la mise en œuvre industrielle et notamment le moulage et le démoulage du pneu pourvu d'une bande de roulement telle que décrite, il est judicieux de prolonger les cavités cachées (canaux 2 et extensions 4) par une incision 31 de faible largeur (0.6 mm dans le cas présent) jusqu'à la surface de roulement à neuf 10, cette incision 31 s'étendant dans la direction longitudinale. Lors du passage dans le contact avec la chaussée, chaque incision 31 se ferme au moins partiellement et favorise ainsi une limitation de la réduction de rigidité liée à la présence même de cette incision, tout en empêchant la pénétration de liquide dans le canal.

La figure 8 montre une coupe longitudinale (c'est à dire dans la direction du canal) de la bande de roulement 1 de cette troisième variante à l'état neuf. Le plan de coupe correspond ici au plan de l'incision 31. On distingue le canal 2 prolongé vers la surface de roulement 10 par une pluralité d'extensions 4 en forme de cavités de hauteur He et de longueur maximale Lmax mesurée dans la direction principale du canal et sur son ouverture sur ledit canal. Dans cet exemple, la distance Lu est égale à 7.9 mm, la hauteur He est égale à 2.1 mm. Le pas entre deux extensions 4 mesuré dans la direction longitudinale est ici égal à 62 mm. Ainsi, on assure en permanence la présence pour un même canal caché d'au moins trois extensions 4 ouvertes dans le contact avec la chaussée dans les conditions d'usage, lorsque le niveau d'usure a permis d'ouvrir ces extensions sur la surface de roulement. Les conditions d'usage pour le pneu décrit ici sont : pression de gonflage égale à 9 bars et charge supportée égale à 4500 kg ; dans ces conditions, la longueur moyenne de contact est 210 mm.

Dans cet exemple le rapport Lmax sur Lmin est égal à 2 (13 mm/6.5 mm).

L'angle A des parois délimitant les extensions 4 est égal à 30 degrés par rapport à la direction radiale (c'est-à-dire selon l'épaisseur de la bande de roulement).

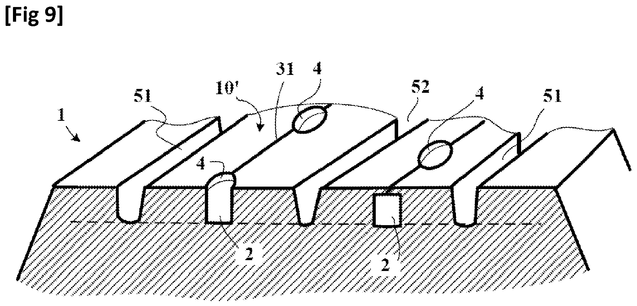

La figure 9 montre une vue partielle de la troisième variante montrée avec la figure 7 après une usure partielle de la bande de roulement 1. À cette étape de l'usure de la bande de roulement, toutes les extensions 4 formées sur chaque canal 4 sont ouvertes sur la nouvelle surface de roulement 10'.On voit que chaque extension 4 présente une ouverture sur l'extérieur dont la section augmente avec l'usure pour être maximale au raccord avec le canal (l'angle A représenté sur la figure 5 reflète cet élargissement).

Dans la réalisation décrite, les deux canaux 2 sont prolongés par une pluralité d'extensions 4 qui toutes s'ouvrent après avoir usé une même épaisseur de bande de roulement. Il est toutefois prévu un décalage circonférentiel entre les ouvertures des extensions d'un canal et celles du canal voisin afin d'optimiser le captage d'eau sur la chaussée dans la région de contact et réduire l'impact sur le bruit en roulage.

Dans le cas de canaux de caractéristiques géométriques différentes, il serait possible de régler l'apparition des ouvertures respectives sur la surface de roulement avec ou sans décalage dans l'épaisseur.

L'invention n'est pas limitée aux trois exemples présentés et diverses modifications peuvent y être apportées sans sortir de son cadre tel que défini par les revendications. Notamment, ce qui a été décrit avec des cavités d'orientation principale longitudinale pourrait s'appliquer à toute autre orientation et notamment transversale ou oblique. De même, il est possible de combiner des canaux orientés circonférentiellement et des canaux orientés transversalement, ces deux types de canaux comportant chacun une pluralité d'extensions mettant en communication ces canaux avec l'extérieur après usure.

## Revendications

1. [Bande de roulement (1) pour pneu de véhicule poids lourd ayant une surface de roulement (10) à neuf destinée à venir en contact avec une chaussée lors du roulage, cette bande de roulement comprenant :
- un premier volume de cavités ouvertes sur la surface de roulement à neuf,
- un deuxième volume de cavités formées en totalité sous la surface de roulement à neuf,
ce deuxième volume de cavités comprenant au moins un canal (2) de hauteur Hc délimité par deux parois principales, ces deux parois principales distantes l'une de l'autre d'une largeur Lc et étant reliées entre elles par une partie inférieure formant un fond et par une partie supérieure (24) dans le prolongement de ces parois principales radialement vers l'extérieur, ce canal (2) étant destiné à former, après usure partielle correspondant à une épaisseur Lu, une rainure additionnelle ouverte sur la surface de roulement,
chaque canal (2) comprenant une pluralité d'extensions (4) formant des cavités, chaque extension (4) s'étendant entre ce canal (4) et la surface de roulement (10) sur une hauteur He au moins égale à 20% et au plus égale à 75% de l'épaisseur de matière Lu entre la partie supérieure du canal (24) et la surface de roulement à neuf (10),
cette bande de roulement (1) étant **caractérisée en ce que** chaque extension (4) s'ouvre au moins dans la partie supérieure du canal (2) par une ouverture ayant une surface de section Sa au moins égale à 0.8*(Hc*Lc).

2. Bande de roulement selon la revendication 1 **dans laquelle** l'épaisseur Lu à partir de laquelle le canal (2) génère une rainure additionnelle est égale à au moins 30% et au plus à 85% de l'épaisseur de matière à user E.

3. Bande de roulement selon la revendication 1 ou la revendication 2 **dans laquelle** chaque extension (4) s'ouvre dans un canal (2) par une ouverture ayant une surface de section Sa dont la largeur est égale à la largeur Lc du canal (2).

4. Bande de roulement selon l'une quelconque des revendications 1 à 3 **dans laquelle** l'ouverture de chaque extension dans un canal a une forme allongée dans la direction principale du canal (2), cette direction principale étant la direction de la longueur du canal dans laquelle se produit un écoulement d'eau lors d'un roulage sur chaussée revêtue d'eau, la longueur maximale Lmax de la section de l'extension étant supérieure à sa longueur minimale Lmin, ces deux longueurs étant mesurées selon une même direction.

5. Bande de roulement selon la revendication 4 **dans laquelle** le ratio entre la longueur maximale Lmax de la section de l'extension (4) et la longueur minimale Lmin de la section de l'extension (4) est au moins égal à 1.5.

6. Bande de roulement selon l'une quelconque des revendications 1 à 5 **dans laquelle** la section de chaque extension à partir de son ouverture sur la surface de roulement après usure partielle va en se réduisant jusqu'à la section Sa.

7. Bande de roulement selon l'une quelconque des revendications 1 à 5 **dans laquelle** toute surface de section prise entre la section de l'ouverture dans le canal et la partie de l'extension (4) la plus proche de la surface de roulement (10) à neuf est inférieure à la surface de section Sa de l'extension sur le canal.

8. Bande de roulement selon la revendication 7 **dans laquelle** l'angle (A) des faces principales délimitant chaque extension et reliant la section de l'ouverture dans le canal et la partie de l'extension (4) la plus proche de la surface de roulement (10) à neuf est au moins égal à 15 degrés avec une direction radiale.

9. Bande de roulement selon l'une quelconque des revendications 1 à 8 **dans laquelle** chaque canal (2) comprend au moins deux extensions dans le contact avec la chaussée dans les conditions d'usage, lorsque ces extensions s'ouvrent sur une surface de roulement après usure partielle.

10. Bande de roulement selon l'une quelconque des revendications 1 à 9 **dans laquelle** une incision (31) prolonge chaque canal (2) et extension (4) jusqu'à la surface de roulement (10) à neuf.

11. Bande de roulement selon l'une quelconque des revendications 1 à 10 **caractérisée en ce qu'**elle comprend au moins deux canaux (2) pourvus chacun d'extensions (4), ces extensions (4) étant décalées circonférentiellement les unes par rapport aux autres d'un canal à l'autre.

12. Bande de roulement selon l'une quelconque des revendications 1 à 11 **caractérisée en ce qu'**elle comprend au moins deux canaux (2) pourvus d'extensions (4), ces extensions (4) s'ouvrant pour des usures partielles différentes de la bande de roulement.

13. Bande de roulement selon l'une quelconque des revendications 1 à 10 **dans laquelle** les extensions (4) d'un même canal (2) ne s'ouvrent pas toutes pour une même usure partielle.

14. Pneu pour véhicule poids lourd comprenant une bande de roulement selon l'une quelconque des revendications précédentes.

## Patentansprüche

1. Laufstreifen (1) für Lastfahrzeugreifen mit einer Lauffläche (10) im Neuzustand, die dazu bestimmt ist, beim Rollen mit einer Fahrbahn in Kontakt zu treten, dieser Laufstreifen umfassend:
- ein erstes Volumen von Hohlräumen, die im Neuzustand zur Lauffläche offen sind,
- ein zweites Volumen von Hohlräumen, die im Neuzustand vollständig unter der Lauffläche ausgebildet sind,
wobei dieses zweite Volumen von Hohlräumen wenigstens einen Kanal (2) mit einer Höhe Hc umfasst, der von zwei Hauptwandungen begrenzt ist, wobei diese zwei Hauptwandungen um eine Breite Lc voneinander beabstandet sind und durch einen unteren Abschnitt, der einen Boden bildet, und einen oberen Abschnitt (24) in der Verlängerung dieser Hauptwandungen radial nach außen miteinander verbunden sind, wobei dieser Kanal (2) dazu bestimmt ist, nach teilweiser Abnutzung entsprechend einer Dicke Lu eine zusätzliche Rille zu bilden, die zur Lauffläche offen ist,
wobei jeder Kanal (2) eine Mehrzahl von Erweiterungen (4) umfasst, die Hohlräume bilden, wobei sich jede Erweiterung (4) zwischen diesem Kanal (4) und der Lauffläche (10) über eine Höhe He erstreckt, die wenigstens gleich 20 % und höchstens gleich 75 % der Materialdicke Lu zwischen dem oberen Abschnitt des Kanals (24) und der Lauffläche im Neuzustand (10) ist,
wobei dieser Laufstreifen (1) **dadurch gekennzeichnet ist, dass** sich jede Erweiterung (4) wenigstens in den oberen Abschnitt des Kanals (2) durch eine Öffnung mit einer Schnittfläche Sa öffnet, die wenigstens gleich 0.8*(Hc*Lc) ist.

2. Laufstreifen nach Anspruch 1, wobei die Dicke Lu, von welcher der Kanal (2) eine zusätzliche Rille erzeugt, wenigstens gleich 30 % und höchstens gleich 85 % der Verschleißmaterialdicke E ist.

3. Laufstreifen nach Anspruch 1 oder 2, wobei sich jede Erweiterung (4) durch eine Öffnung mit einer Schnittfläche Sa in einen Kanal (2) öffnet, deren Breite gleich der Breite Lc des Kanals (2) ist.

4. Laufstreifen nach einem der Ansprüche 1 bis 3, wobei die Öffnung jeder Erweiterung in einem Kanal eine längliche Form in der Hauptrichtung des Kanals (2) aufweist, wobei diese Hauptrichtung die Richtung der Länge des Kanals ist, in der bei einem Rollen auf wasserbedeckter Fahrbahn ein Wasserablauf erfolgt, wobei die Höchstlänge Lmax des Schnitts der Erweiterung größer als deren Mindestlänge Lmin ist, wobei diese beiden Längen in ein und derselben Richtung gemessen werden.

5. Laufstreifen nach Anspruch 4, wobei das Verhältnis zwischen der Höchstlänge Lmax des Schnitts der Erweiterung (4) und der Mindestlänge Lmin des Schnitts der Erweiterung (4) wenigstens gleich 1.5 ist.

6. Laufstreifen nach einem der Ansprüche 1 bis 5, wobei der Schnitt jeder Erweiterung ausgehend von deren Öffnung zur Lauffläche nach teilweiser Abnutzung bis zum Schnitt Sa abnimmt.

7. Laufstreifen nach einem der Ansprüche 1 bis 5, wobei jede Schnittfläche zwischen dem Schnitt der Öffnung in den Kanal und dem Abschnitt der Erweiterung (4), welcher der Lauffläche (10) im Neuzustand am nächsten liegt, kleiner als die Schnittfläche Sa der Erweiterung zum Kanal ist.

8. Laufstreifen nach Anspruch 7, wobei der Winkel (A) der Hauptflächen, die jede Erweiterung begrenzen und den Schnitt der Öffnung in den Kanal und den Abschnitt der Erweiterung (4), welcher der Lauffläche (10) im Neuzustand am nächsten liegt, verbinden, wenigstens gleich 15 Grad mit einer Radialrichtung ist.

9. Laufstreifen nach einem der Ansprüche 1 bis 8, wobei jeder Kanal (2) unter Gebrauchsbedingungen wenigstens zwei Erweiterungen in Kontakt mit der Fahrbahn umfasst, wenn sich diese Erweiterungen nach teilweiser Abnutzung zu einer Lauffläche öffnen.

10. Laufstreifen nach einem der Ansprüche 1 bis 9, wobei im Neuzustand ein Einschnitt (31) jeden Kanal (2) und jede Erweiterung (4) bis zur Lauffläche (10) verlängert.

11. Laufstreifen nach einem der Ansprüche 1 bis 10, **dadurch gekennzeichnet, dass** er wenigstens zwei Kanäle (2) umfasst, die jeweils mit Erweiterungen (4) versehen sind, wobei diese Erweiterungen (4) in Umfangsrichtung von einem Kanal zum anderen bezogen aufeinander versetzt sind.

12. Laufstreifen nach einem der Ansprüche 1 bis 11, **dadurch gekennzeichnet, dass** er wenigstens zwei Kanäle (2) umfasst, die mit Erweiterungen (4) versehen sind, wobei sich diese Erweiterungen (4) bei verschiedenen teilweisen Abnutzungen des Laufstreifens öffnen.

13. Laufstreifen nach einem der Ansprüche 1 bis 10, wobei sich die Erweiterungen (4) ein und desselben Kanals (2) nicht alle bei ein und derselben teilweisen Abnutzung öffnen.

14. Reifen für Lastfahrzeug umfassend einen Laufstreifen nach einem der vorhergehenden Ansprüche.

## Claims

1. Tread (1) for a heavy-duty vehicle tyre, having a tread surface (10) in the new state that is intended to come into contact with a road surface when running, this tread comprising:
- a first volume of cavities that open onto the tread surface in the new state,
- a second volume of cavities that are formed entirely under the tread surface in the new state,
this second volume of cavities comprising at least one channel (2) of height Hc delimited by two main walls, these two main walls being spaced apart from one another by a width Lc and being connected together by a lower part forming a bottom and by an upper part (24) that continues these main walls radially towards the outside, this channel (2) being intended to form, after partial wear corresponding to a thickness Lu, an additional groove that opens onto the tread surface,
each channel (2) comprising a plurality of extensions (4) forming cavities, each extension (4) extending between this channel (4) and the tread surface (10) over a height He at least equal to 20% and at most equal to 75% of the thickness of material Lu between the upper part of the channel (24) and the tread surface (10) in the new state,
this tread (1) being **characterized in that** each extension (4) opens at least into the upper part of the channel (2) through an opening having a cross-sectional area Sa at least equal to 0.8*(Hc*Lc).

2. Tread according to Claim 1, **wherein** the thickness Lu from which the channel (2) creates an additional groove is equal to at least 30% and to at most 85% of the thickness E of material to be worn away.

3. Tread according to Claim 1 or Claim 2, **wherein** each extension (4) opens into a channel (2) through an opening having a cross-sectional area Sa of which the width is equal to the width Lc of the channel (2).

4. Tread according to any one of Claims 1 to 3, **wherein** the opening of each extension into a channel has an elongate shape in the main direction of the channel (2), this main direction being the direction of the length of the channel in which water flows when running on a road surface covered in water, the maximum length Lmax of the cross section of the extension being greater than the minimum length Lmin thereof, these two lengths being measured in one and the same direction.

5. Tread according to Claim 4, **wherein** the ratio between the maximum length Lmax of the cross section of the extension (4) and the minimum length Lmin of the cross section of the extension (4) is at least equal to 1.5.

6. Tread according to any one of Claims 1 to 5, **wherein** the cross section of each extension from when it opens onto the tread surface after partial wear decreases down to the cross section Sa.

7. Tread according to any one of Claims 1 to 5, **wherein** any cross-sectional area considered between the cross section of the opening into the channel and the part of the extension (4) closest to the tread surface (10) in the new state is less than the cross-sectional area Sa of the extension over the channel.

8. Tread according to Claim 7, **wherein** the angle (A) of the main faces delimiting each extension is at least equal to 15 degrees to a radial direction.

9. Tread according to any one of Claims 1 to 8, **wherein** each channel (2) comprises at least two extensions in contact with the road surface under working conditions, when these extensions open onto a tread surface after partial wear.

10. Tread according to any one of Claims 1 to 9, **wherein** a sipe (31) continues each channel (2) and extension (4) as far as the tread surface (10) in the new state.

11. Tread according to any one of Claims 1 to 10, **characterized in that** it comprises at least two channels (2) each provided with extensions (4), these extensions (4) being offset circumferentially with respect to one another from one channel to the other.

12. Tread according to any one of Claims 1 to 11, **characterized in that** it comprises at least two channels (2) provided with extensions (4), these extensions (4) opening at different amounts of partial wear of the tread.

13. Tread according to any one of Claims 1 to 10, **wherein** the extensions (4) of one and the same channel (2) do not all open at the same amount of partial wear.

14. Tyre for a heavy-duty vehicle, comprising a tread according to any one of the preceding claims.
